# EUROPÄISCHE PATENTSCHRIFT

(11) **EP 2 735 419 B1**
(45) Veröffentlichungstag und Bekanntmachung des Hinweises auf die Patenterteilung: **27.09.2017**
(21) Anmeldenummer: 13005503.1
(22) Anmeldetag: 26.11.2013
(51) Int. Cl.: B29C 45/26, B23Q 1/42, B29C 33/30

(54) **Formvorrichtung zum Formen von geformten Gegenständen mit einer Feinzentrierungseinheit**
Moulding device for the moulding of moulded articles comprising a fine centring unit
Dispositif de moulage pour le moulage d'objets moulés comprenant une unité de centrage fin

(30) Priorität: 26.11.2012 DE 102012023072
(43) Veröffentlichungstag der Anmeldung: 28.05.2014
(73) Patentinhaber: Knarr, Rainer, 95233 Helmbrechts (DE)
(72) Erfinder: Knarr, Rainer, 95233 Helmbrechts (DE)
(74) Vertreter: Samson & Partner Patentanwälte mbB

(56) Entgegenhaltungen:
- DE-U1-202004 012 169
- US-A- 5 762 977
- US-A- 5 862 853

## Beschreibung

### Gebiet der Erfindung

Die Erfindung betrifft eine Formvorrichtung mit einer Feinzentrierungseinheit für den Werkzeug- und Formenbau zum Feinzentrieren wenigstens zweier Formelemente einer Formvorrichtung zum Formen von geformten Gegenständen, insbesondere eines Spritzguss-, Druckguss- oder Stanzwerkzeugs, umfassend ein erstes Führungselement mit wenigstens zwei Gleitflächen, das mit einem ersten Formelement koppelbar ist, und ein zweites Führungselement, das mit einem zweiten Formelement koppelbar ist, wobei das zweite Führungselement einen Führungskanal umfasst, der komplementär zu den wenigstens zwei Gleitflächen des ersten Führungselements ausgebildet ist und beim Öffnen und Schließen der Formelemente das erste Führungselement wenigstens teilweise im Führungskanal gleitet. Zusätzlich betrifft die Erfindung die Verwendung einer Feinzentrierungseinheit zum Zentrieren in einer Formvorrichtung zum Formen von geformten Gegenständen sowie eine mit einer Feinzentrierungseinheit ausgestattete Formvorrichtung zum Formen von geformten Gegenständen.

### Stand der Technik

Feinzentrierungseinheiten für den Werkzeug- und Formenbau, insbesondere für Formvorrichtungen zum Formen von geformten Gegenständen sind bekannt. Oftmals sind Formvorrichtungen mehrteilig aufgebaut und umfassen wenigstens zwei Formelemente, etwa Formhälften und/oder Zubehörteile, die jeweils eine Formoberseite und eine Formunterseite definieren. Die Formoberseite wird auch Anguss/Anspritz- oder Düsenseite und die Formunterseite als Ausstoß- oder Auswurfseite bezeichnet.

Um einen geformten Gegenstand herzustellen, werden jeweils die beiden Formhälften über einen Schließ- bzw. Verriegelungsmechanismus in einer Linearbewegung aufeinander zu gefahren, wobei zwischen den beiden Formhälften eine Kavität für den zu formenden Gegenstand gebildet ist. Sofern ein Formwerkzeug als Stanzwerkzeug ausgelegt ist, umfasst dieses ein Stanzteil mit einer Kontur des zu formenden Gegenstands, der dann aus einem üblicherweise festen Material ausgestanzt wird.

Feinzentrierungseinheiten haben dabei die Aufgabe, die beiden aufeinander zufahrenden Formhälften beim Schließen gegeneinander auszurichten. Dies ist insbesondere von Bedeutung, da ein Versatz der beiden Formhälften oder beispielsweise eines Stanzwerkzeugs im Vergleich zum zu stanzenden Material Fehler bei der Herstellung der geformten Gegenstände verursachen kann oder ein Versatz die Kontur der Formhälften oder das Stanzwerkzeug beschädigen könnte. Insgesamt ist es erforderlich, die Zentrierung der beiden Formhälften in einem sehr engen Toleranzbereich durchzuführen.

Allgemein können Formvorrichtungen beispielsweise beim Spritzgießen bzw. Spritzgussverfahren eingesetzt werden, wobei ein Kunststoffgranulat oder eine Kunststoffschmelze in den Hohlraum der Formhälften eingespritzt wird. Darüber hinaus können Formvorrichtungen auch beim Druckgussverfahren beispielsweise bei einem Druckgusswerkzeug eingesetzt werden, wobei Metalle zumeist mit einem niedrigen Schmelzpunkt als flüssige Schmelze mit hohem Druck und hoher Geschwindigkeit in die Kavität zwischen den Formhälften eingebracht wird.

Nach einem Erkalten bzw. Erstarren oder Stanzen des jeweils geformten Gegenstands lässt sich dieser über einen bekannten Auswurfmechanismus beispielsweise mit Auswerferstiften oder anders geeigneten, dem Fachmann bekannten, Ausstoßvorrichtungen nach Auseinanderfahren der beiden Formhälften zum Öffnen aus der unteren Formhälfte heraus stoßen.

Aus der DE 20 2004 012 169 U1 ist eine offene Gleitführung an einem Spritzgusswerkzeug bekannt, die dadurch gekennzeichnet ist, dass die U-Profile der Negativ-Führungen mit ihrer offenen Seite hin von den Formhälften weg weisen, derart, dass die Basis des jeweiligen U-Profils der Negativführung in der Ebene der linearen Bewegungsrichtungen etwa senkrecht zu den Ebenen der Formhälften liegt. Dadurch soll der Führungsweg verlängert werden.

Ferner sind geschlossene Gleitführungen der Formhälften bekannt. Dabei sind bolzenförmig ausgestaltete Führungselemente jeweils in einer Formhälfte vorgesehen, die beim Schließen der Formhälfte in komplementäre Bohrungen eintauchen. Die Bolzen sind in den Bohrungen mit einem geringen Spiel axial verschiebbar geführt und dienen einer Grobzentrierung der sich schließenden Formhälften.

Bekannte Gleitführungen werden üblicherweise senkrecht zu einer Trennebene zweier Formhälften angeordnet.

Darüber hinaus sind verschiedene Gleitführungen bekannt, die beispielsweise als Flachführungen ausgebildet sind. So beispielsweise die Modelle E1315 und E1320 der Firma Meusburger oder die Modelle E1306 bzw. E1304 der Firma Meusburger, die eine Fein- bzw. Endzentrierung zeigen. Dabei gleiten rechteckig ausgestaltete Führungselemente in U-förmigen Profilen. Darüber hinaus sind ähnliche Rechteckführungen der Firma Strack Normalien bekannt, beispielsweise die Ausführung Z50. Diese bekannten Gleitführungen umfassen oftmals viele Komponenten, was zu Genauigkeitsverlusten führen kann.

Insgesamt sind die aus dem Stand der Technik bekannten Lösungen zumeist komplex im Aufbau und haben einen hohen Platzbedarf. Darüber hinaus sind oftmals bekannte Lösungen kostenintensiv in der Einarbeitung und nur begrenzt einsetzbar. Insbesondere dringen bei den bekannten Lösungen die jeweiligen Führungselemente mit ihrer gesamten Querschnittsfläche in die jeweiligen Führungsflächen ein.

US 5,762,977 A offenbart eine Formvorrichtung mit einer Feinzentrierungs-Einheit gemäß dem Oberbegriff des unabhängigen Anspruchs 1.

Ferner offenbart US 5,862,853 A einen Einsatz für den Formenbau mit einem ausziehbaren Kernelement. Das Kernelement ist zwischen einer eingefahrenen und ausgezogenen Position verfahrbar.

### Aufgabe und Lösung

Vor diesem Hintergrund ist es Aufgabe der Erfindung, eine Formvorrichtung mit einer verbesserten und verschleißarmen Feinzentrierungseinheit, die gleichzeitig funktionssicher ist, bereit zu stellen.

Diese Aufgabe wird jeweils durch die Gegenstände der unabhängigen Ansprüche 1 und 11 gelöst. Die gattungsbildende Formvorrichtung weist somit zusätzlich die Merkmale des kennzeichnenden Teils des Anspruchs 1 auf.

Der Gegenstand des Anspruchs 11 zeichnet sich dadurch aus, dass wenigstens eine Feinzentrierungseinheit in bzw. bei einer Formvorrichtung zum Zentrieren der Formvorrichtung zum Formen von geformten Gegenständen, insbesondere eines Spritzguss-, Druckguss- oder Stanzwerkzeugs verwendet wird.

Die erfindungsgemäße Feinzentrierungseinheit ist funktionssicher und erhöht dadurch die Zuverlässigkeit einer mit ihr ausgestatteten Formvorrichtung zum Formen von geformten Gegenständen. Erfindungsgemäß lässt sich über die keilförmige Ausbildung mit der schräg verlaufenden Stirnfläche des ersten Formelements eine Vergrößerung des Zentrierwegs erreichen, wobei zeitgleich eine kompakte Bauweise und damit eine kurze Einbauhöhe ermöglicht werden. Dies reduziert den Materialverbrauch und Aufwand bei der Formenherstellung. Aufgrund der keilförmigen Ausgestaltung und der damit verbundenen vergrößerten Zentrierfläche verringert sich der Platzbedarf beim Neubau von Werkzeugen, da sie sich im Vergleich zum bekannten Stand der Technik kürzer verbauen lassen. Die schräg verlaufende Verlängerung der Gleitflächen bewirkt einen längeren Zentrierweg.

Insbesondere beim Neubau von Formen verringert dies die Kosten einer herzustellenden Form bzw. Formvorrichtung. Formvorrichtung im Sinne der vorliegenden Erfindung umfasst dabei allgemein Spritzguss- und Druckguss-Werkzeuge sowie Stanzwerkzeuge sowie ähnlich ausgestaltete Werkzeuge zum Formen von Gegenständen.

Das Spritzgussverfahren wird üblicherweise zur Herstellung von Gegenständen aus Kunststoff und das Druckgussverfahren für die Herstellung von metallischen Gegenständen verwendet. Dabei lassen sich hohe Stückzahlen mit denselben Formhälften herstellen. Insbesondere bei Spritzguss- und Druckgusswerkzeugen sind an den Innenseiten der Formelemente, die auch als Formen oder als Formhälften bezeichnen werden, Formkonturen des herzustellenden Gegenstands als Negativabdruck eingearbeitet oder eingesetzt. In Abhängigkeit von dem jeweils herzustellenden Gegenstand werden zwei oder gar mehr Formplatten verwendet.

Insgesamt sind Gleitführungen im Gegensatz zu wälzgelagerten Linearführungen für eine gradlinige Führung ausgelegt. Bei einer Gleitführung entsteht eine wesentliche größere Kontaktfläche im Vergleich zu anderen Führungsarten, wie beispielsweise Wälzführungen mit Kugeln oder Rollen, die eine wesentlich geringere Flächenpressung, jedoch höhere Reibung zur Folge hat.

Die beiden Formelemente lassen sich über einen Schließmechanismus schließen bzw. über einen Öffnungsmechanismus öffnen, wobei dazu die beiden Formhälften linear senkrecht zu einer dazwischen liegenden Trennebene axial verschiebbar ausgebildet sind.

Vorzugsweise erfolgt beim Eintauchen des keilförmigen Endes des ersten Führungselements in den Führungskanal eine Gleitflächenzunahme stufenlos.

Ein Eintauchen der Keilspitze zunächst in den Führungskanal erlaubt es vorteilhaft, nur einen Querschnittsanteil des ersten Führungselements in den Führungskanal einzuführen. Dies ermöglicht einen sehr weichen Eintritt und damit ein sehr weiches Zentrieren der beiden zueinander verschiebbaren Formhälften. Dies verhindert abrupte Bewegungen bzw. Kraftübertragungen und verringert einen Verschleiß der Formhälften und von Maschinenelementen.

Bevorzugt liegt der Neigungswinkel der schrägen Stirnfläche in einem Bereich von 05° bis 60° zur Trennebene der Formelemente. Besonderes bevorzugt liegt der Neigungswinkel der schrägen Stirnfläche in einem Bereich von 10° bis 45° zur Trennebene der Formelemente. Insbesondere ein Bereich zwischen 20° bis 35° zur Trennebene der Formelemente hat sich als vorteilhaft erwiesen.

Diese Bereiche haben sich als vorteilhaft erwiesen, da sich in Abhängigkeit vom entsprechenden Neigungswinkel die Zentrierflächenzunahme bzw. Gleitflächenzunahme und damit der Zentrierweg variieren und vergrößern lässt. Auch ist so eine flache bis steile Auslegung des Neigungswinkels bzw. der schräg verlaufenden Stirnfläche möglich. Die Keilform der Schrägfläche bzw. das obere Ende des jeweiligen Führungselements verlängert somit die jeweils seitlichen ausgebildeten Gleitführungsflächen. Auch können die Gleitführungsflächen an mehr als zwei Seiten ausgebildet sein.

Vorzugsweise umfasst das erste Führungselement einen zapfenförmigen Abschnitt mit einem keilförmigen Ende, der beim Feinzentrieren im Führungskanal eintaucht.

Dies ermöglicht eine kompakte Bauweise und insbesondere eine ausreichende Stabilität der Feinzentrierungseinheit.

Vorzugsweise ist der Führungskanal U-förmig und nach wenigstens einer Seite hin offen ausgebildet.

Dies gewährleistet eine sichere Führung des ersten Führungselements im zweiten Führungselement und ermöglicht darüber hinaus die Feinzentrierungseinheit am Rand einer jeweiligen Formhälfte derart anzuordnen, dass die offene Seite des Führungskanals nach außen gerichtet ist.

Alternativ ist der Führungskanal vorzugsweise quaderförmig und seitlich geschlossen ausgebildet.

Dies ermöglicht eine stabile Führung des ersten Führungselements innerhalb des Führungskanals. Bevorzugt ist in diesem Fall der Führungskanal derart ausgebildet, dass er zwei zu den Gleitflächen des ersten Führungselements komplementäre Gleitflächen umfasst, wobei die übrigen beiden Flächen ein gewisses Spiel ermöglichen, um eine leichtere Einführung des ersten Führungselements im Führungskanal zu ermöglichen.

Auch ermöglicht diese Ausgestaltung einen mittigen Einbau im Formelement, insbesondere eine Einbaulage, die vom Rand des jeweiligen Formelements beabstandet ist.

Vorzugsweise ist das erste Führungselement bei der Feinzentrierungseinheit einstückig ausgebildet.

Diese Maßnahme ermöglicht eine hohe Stabilität und eine fertigungstechnische einfache Realisierung.

Bevorzugt ist alternativ das erste Führungselement der Feinzentrierungseinheit mehrteilig ausgebildet.

So lassen sich beispielsweise Einzelelemente im Falle einer Beschädigung einfach austauschen und separat vermarkten.

Bevorzugt umfasst dazu das erste Führungselement einen Führungszapfen und ein Trägerelement, die miteinander koppelbar sind.

Dabei kann beispielsweise im Trägerelement eine entsprechende Ausnehmung eingebracht sein, in die der Führungszapfen eingesetzt wird, und zusätzlich über ein Befestigungsmittel, beispielsweise eine Schraube oder ein anderes geeignetes Befestigungsmittel kann der Führungszapfen mit dem Trägerelement verschraubt bzw. anders geeignet gekoppelt werden. Diese Maßnahmen sind fertigungstechnisch einfach zu realisieren, wobei das Vorsehen eine Ausnehmung im Trägerelement, der beispielsweise sockelartig ausgebildet sein kann, eine Stabilität der Kopplungsverbindung zwischen diesen Elementen erhöhen kann.

Ferner kann das erste Führungselement an den wenigstens zwei Gleitflächen bevorzugt Gleitmittelausnehmungen und/oder Gleitmitteleinsätze umfassen.

Eine Gleitmittelausnehmung kann dabei beispielsweise als Nut in entsprechend geeigneter geometrischer Ausgestaltung an der Gleitfläche eingebracht sein, in die Schmiermittel eingebracht wird, um die Reibung zwischen den zwei Gleitflächen des ersten Führungselements und den Gegengleitflächen im zweiten Führungselement bzw. im Führungskanal zu minimieren. Als geeignete Geometrien haben sich beispielsweise Zickzack-Formen oder auch Kurvenformen erwiesen, die möglichst großflächig die Gleitflächen mit einem entsprechenden Gleitmittel beispielsweise einem Schmieröl oder einem anderen geeigneten Schmiermittel benetzen. Alternativ und/oder zusätzlich können auch in die Nuten oder in spezielle Ausnehmungen Gleitmitteleinsätze eingesetzt werden, die beispielsweise ein entsprechendes Gleitmittel wie Grafit oder Schmierfett umfassen. Alternativ und/oder zusätzlich können die entsprechenden Oberflächen der Gleitflächen mit einem reibungsmindernden Material beschichtet sein und/oder eine Gleitbeschichtung zur Verschleißminderung umfassen. Ebenso ist ein besonders gehärtetes Material hier für die Gleitflächen verwendbar, um einen Verschleiß zu verringern. Das zweite Führungselement umfasst an seinem dem zweiten Formelement zugewandten Ende des Führungskanals eine komplementäre schräg verlaufende Stirnfläche, wobei sich dann die komplementäre schräg verlaufende Stirnfläche und die schräg verlaufende Stirnfläche des ersten Formelements beim Schließen der Formhälften nähern.

Vorzugsweise liegt der Neigungswinkel der komplementären Stirnfläche in einem Bereich von 10° bis 45° zur Trennebene der Formelemente.

Dadurch lässt sich über eine entsprechend steilere oder flachere Ausgestaltung der Stirnfläche der entsprechende Zentrierweg bzw. die Gleitflächen vergrößern oder verringern.

Der Einsatz von wenigstens zwei Feinzentrierungseinheiten in einer Formvorrichtung ermöglicht dabei eine passgenaue Feinzentrierung der beiden Formhälften beim Schließen derselben.

Vorzugsweise umfasst eine solche Formvorrichtung wenigstens vier Feinzentrierungseinheiten, die kreuzförmig in den Formelementen bzw. Formhälften jeweils angeordnet sind.

Eine kreuzförmige Anordnung ermöglicht eine Anordnung der Feinzentrierungseinheiten, die einer entsprechenden Temperaturveränderung beim Spritz- oder Druckgießen in einer Formvorrichtung entgegen wirkt. Insbesondere dehnt sich die Wärme beim Formen eines geformten Gegenstands von der Mitte nach außen aus. Insoweit stellt die Anordnung an den jeweiligen Nullpunkten der Feinzentrierungseinheiten sicher, dass die entsprechenden ersten und zweiten Führungselemente auch bei Temperaturschwankungen innerhalb der Formhälften sicher geöffnet und geschlossen werden können, um einer Materialausdehnung entgegenzuwirken.

Vorzugsweise umfasst die Formvorrichtung sowohl in ihrem ersten Formelement wenigstens eine Ausnehmung, die zur koppelbaren Aufnahme des ersten Führungselements ausgelegt ist und umfasst das zweite Formelement wenigstens eine zweite Ausnehmung, die zur koppelbaren Aufnahme des zweiten Führungselements ausgelegt ist.

Alternativ können auch die jeweiligen Feinzentrierungseinheiten von außen auf die Platten geschraubt oder anders geeignet befestigt werden, jedoch gewährleistet die Einbringung von Ausnehmungen in den jeweiligen Formhälften eine stabile Befestigung der Führungselemente in den Formhälften und damit eine toleranzgenaue Feinzentrierung.

### Figurenbeschreibung

Ausführungsbeispiele der Erfindung sind im Folgenden unter Bezugnahme auf die beigefügten, schematischen Zeichnungen näher erläutert. Elemente, die sich in den verschienen Figuren entsprechen, tragen dieselben Bezugszeichen. Dabei zeigt:
- Fig. 1: eine perspektivische Schrägansicht einer Formvorrichtung mit eingesetzten Feinzentrierungseinheiten in einem offenen Zustand;
- Fig. 2: eine perspektivische Schrägansicht der Formvorrichtung aus Fig. 1 im geschlossenen Zustand;
- Fig. 3: eine perspektivische Schrägansicht eines Ausführungsbeispiels einer erfindungsgemäßen Feinzentrierungseinheit im offenen Zustand;
- Fig. 4: die erfindungsgemäße Feinzentrierungseinheit aus Fig. 3 im geschlossenen Zustand;
- Fig. 5a: eine Schnittebenenansicht der Feinzentrierungseinheit aus Fig. 4;
- Fig. 5b: eine Querschnittsdarstellung der Feinzentrierungseinheit aus Fig. 4 bzw. 5a entlang der Schnittebene B-B;
- Fig. 5c: eine Querschnittsdarstellung der Feinzentrierungseinheit aus Fig. 4 entlang der Schnittebene A-A;
- Fig. 6: eine perspektivische Schrägansicht der Feinzentrierungseinheit aus Fig. 4 von der gegenüberliegenden Seite/von hinten;
- Fig. 7: eine perspektivische Schrägansicht eines weiteren Ausführungsbeispiels einer erfindungsgemäßen Feinzentrierungseinheit in einem geöffneten Zustand und einer Explosionsdarstellung;
- Fig. 8: eine perspektivische Schrägansicht auf das Ausführungsbeispiel aus Fig. 7 im geschlossenen Zustand;
- Fig. 9a: eine Schnittebenenansicht bezüglich des Ausführungsbeispiels aus Fig. 7;
- Fig. 9b: eine Querschnittsansicht entlang der Schnittebene B-B;
- Fg. 9c: eine Querschnittsansicht entlang der Schnittebene A-A; und
- Fig. 10: eine perspektivische Schrägansicht eines nicht-erfindungsgemäßen Ausführungsbeispiels einer Feinzentrierungseinheit.

In der folgend verwendeten Lagebezeichnung, wie oben, unten, vorne, hinten, rechts und links beziehen sich aus der Sicht eines Betrachters auf eine vor ihm angeordnete Formvorrichtung bzw. Feinzentrierungseinheit, wobei der Betrachter auf eine Seitenfläche der Formvorrichtung bzw. Feinzentrierungseinheit schaut.

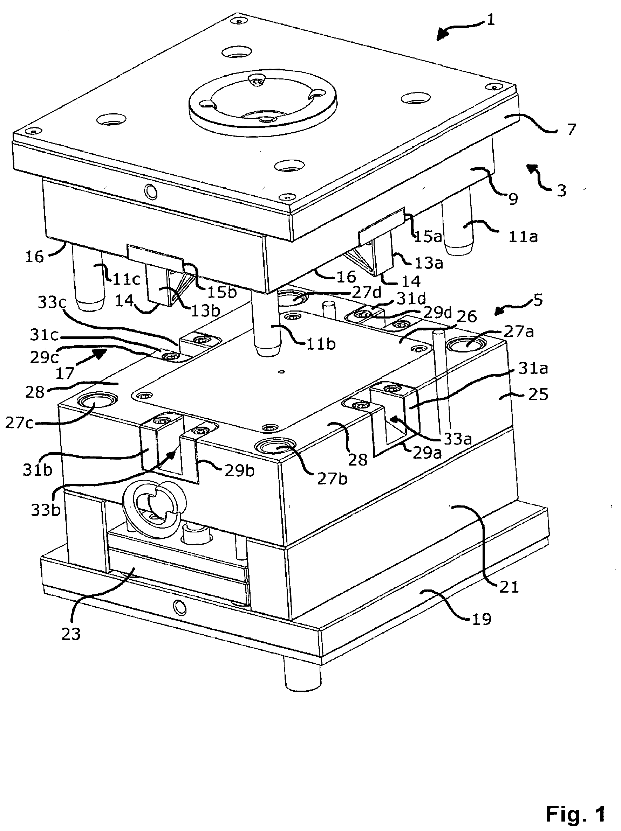

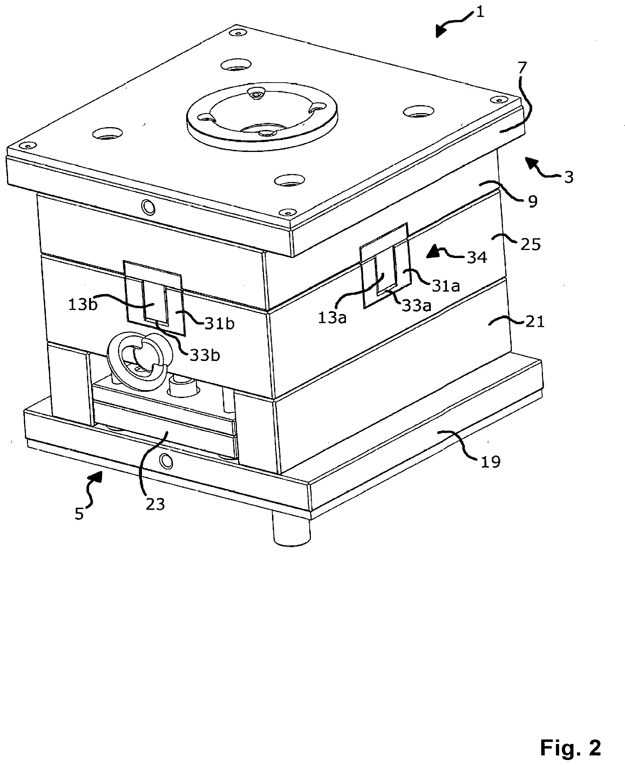

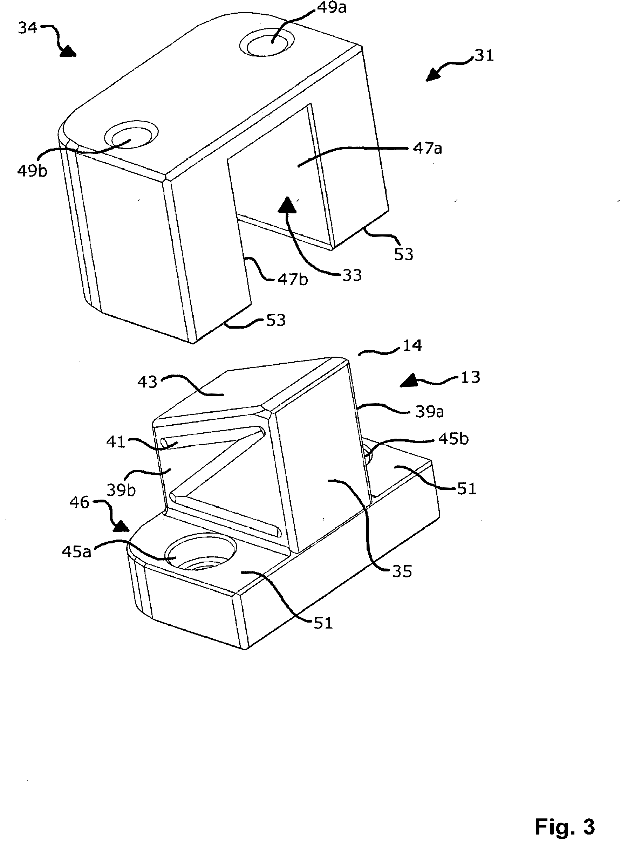

Der Aufbau der Formvorrichtung wird zunächst anhand der Fig. 1 und 2 erläutert. Nachfolgend wird die Funktionsweise der erfindungsgemäßen Feinzentrierungseinheiten anhand der Fig. 3 bis 10 im Detail dargestellt.

Fig. 1 zeigt eine Formvorrichtung (1) mit zwei Formelementen, einem Formoberteil (3) und einem Formunterteil (5), die auch als Formhälften bezeichnet werden, in einer geöffneten Position. Fig. 2 zeigt dieselbe Formvorrichtung 1 in ihrer geschlossenen Position. Die beiden Formhälften 3 und 5 werden über einen bekannten Öffnungs- bzw. Schließmechanismus (nicht gezeigt) von der geöffneten in die geschlossene Position und umgekehrt gebracht.

Wie nachfolgend detailliert dargestellt wird, erfolgt beim Schließen der beiden Formhälften 3, 5 zunächst ein Vorzentrieren der beiden Formhälften über erste Führungs- bzw. Vorzentriereinheiten. Die Vorzentriereinheiten umfassen Führungsbolzen 11a, b, c und d, die mit komplementären Bohrungen 27a, b, c, d in Eingriff gehen, und dabei die beiden Formhälften 3, 5 gegeneinander ausrichten und vorzentrieren. Dazu sind die Führungsbolzen 11a, b, c und d an ihrem unteren Ende abgerundet und die Bohrungen 27a, b, c, d mit einem gewissen Spiel gegenüber den Führungsbolzen 11a, b, c und d ausgebildet. Die Führungsbolzen 11a, b, c, d sind jeweils in der oberen Formhälfte angeordnet und die Bohrungen 27a, b, c und d in den jeweiligen Ecken der unteren Formhälfte 5; beide Element können jedoch auch umgekehrt angeordnet sein.

Zusätzlich erfolgt beim Schließen der beiden Formhälften 3, 5 eine Feinzentrierung über kreuzförmig in den Formhälften 3,5 angeordnete Feinzentrierungseinheiten 34a, b, c und d, von denen in Fig. 1 nur zwei, 34a und 34b, gezeigt sind. Beim Feinzentrieren tauchen zapfenartige Führungselemente 13a, und 13b im Anschluss an ein Eintauchen der Führungsbolzen 11a, b, c und d, nach Art einer Nut Feder Verbindung in komplementäre Führungskanäle 33a, b, c und d, die in jeweiligen zweiten Führungselementen 31a, b, c und d in der unteren Formhälfte 5 angeordnet sind. Dies wird im Detail hinsichtlich Fig. 3 bis 10 beschrieben.

Die Formvorrichtung 1 kann beispielsweise beim Spritzgussverfahren zur Herstellung von Kunststoffprodukten oder für ein Druckgussverfahren für die Herstellung von metallischen Produkten verwendet werden. In der in Fig. 2 gezeigten, geschlossenen Stellung bilden die obere Formhälfte 3 und die untere Formhälfte 5 dazwischen einen Hohlraum für den zu formenden Gegenstand. In diesen Hohlraum wird bei einem Spritzgussverfahren beispielsweise ein Kunststoff oder ein anderes geeignetes Material in einer nicht gezeigten Spritzvorrichtung plastifiziert und in den Hohlraum eingespritzt. Beim Druckgussverfahren wird eine metallische Schmelze unter Druck in diesen Hohlraum eingebracht. Zum Einleiten des geschmolzenen Materials bzw. der jeweiligen Schmelze ist eine bekannte Angussvorrichtung (nicht gezeigt) vorgesehen, die über sog. Heißkanäle die jeweilige Schmelze zuleitet. Ein gehärteter bzw. erstarrter Gegenstand kann dann nach einem Öffnen der beiden Formhälften 3, 5 über eine Auswurfvorrichtung in bekannter Weise entnommen werden.

Die obere Formhälfte kann einstückig ausgebildet sein oder aber, wie dargestellt, eine Aufspannplatte 7 umfassen, auf der in bekannter Weise eine düsenseitige Formkonturplatte 9 befestigt ist. Die Formkonturplatte 9 umfasst in ihrem Inneren eine Form, die aus entsprechend geeigneten Materialien hergestellt ist. Zur Herstellung von kleineren Produktserien kann beispielsweise die Form aus Aluminium bestehen. Bei größeren Produktserien sind jedoch die Formen üblicherweise aus einem Stahl, beispielsweise vergüteter Werkzeugstahl und/oder Hartmetall gefertigt. In den Formen sind jeweils die Formkonturen als Negativabdruck eingearbeitet. Diese Formkonturen bestimmen die Form eines Gegenstandes.

Darüber hinaus sind an der Formkonturplatte 9 jeweils in den Ecken Führungsbolzen 11a, b, c, d eingebracht, von denen in der perspektivischen Darstellung nur drei gezeigt sind. Diese Führungsbolzen sind an ihren Enden abgerundet und dienen einer Grobzentrierung der beiden Formhälften 3 und 5 beim Schließen. Ferner sind in der Formkonturplatte 9 erste Führungselemente 13a, b, c und d eingebracht, von denen in Fig. 1 nur zwei dargestellt sind. Diese umfassen einen Sockelabschnitt, der mit der Formhälftenplatte 9 verbunden ist. Dazu sind in der Formkonturplatte 9 jeweils komplementäre Ausnehmungen 15a, b, d vorgesehen, die den sockelartigen Abschnitt der Führungselemente 13a, b, c und d aufnehmen. Diese können beispielsweise dort über bekannte Befestigungsmittel beispielsweise Schrauben oder andere geeignete Maßnahmen mit der Formkonturplatte 9 verbunden werden. An seinem der Formkonturplatte 9 abgewandten Ende umfasst das Führungselement 13a, b, c und d einen zapfenartigen Abschnitt, der jeweils an seiner endseitigen Stirnfläche als Keilspitze 14 ausgebildet ist. Die Unterseite der Formkonturplatte 9 bildet zwischen den Führungsbolzen 11a, b, c und d sowie den zapfenartigen Führungselementen 13a, b, c und d jeweils eine Auflagefläche 16, die im geschlossenen Zustand auf der unteren Formhälfte 5 an einer entsprechenden Gegenfläche 28 aufliegt (Vgl. Fig. 2).

Zwischen der oberen Formhälfte 3 und der unteren Formhälfte 5 ist die Trennebene 17 vorgesehen.

Die untere Formhälfte 5, auch Auswerferseite genannt, umfasst eine Aufspannplatte 19, auf der Distanzplatten 21 angeordnet sind, die die Form von der Aufspannplatte 19 beabstanden. Zwischen den Distanzplatten 21 ist ein Auswurfmechanismus 23 vorgesehen, der in bekannter Weise nach einem Formen eines zu formenden Gegenstandes diesen aus der unteren Formhälfte 5 auswirft.

Mit den Distanzplatten 21 ist eine auswerferseitige Formkonturplatte 25 verbunden, die in ihrem Inneren eine Form 26 in bekannter Weise trägt und hält. Die Oberseite der Formkonturplatte 25 bildet die Anlagefläche 28 als Gegenfläche zur Auflagefläche 16 der oberen Formhälfte 3. In den Ecken der Formkonturplatte 25 sind jeweils Bohrungen 27a, b, c und d eingebracht, die ein im Vergleich zu den Führungsbolzen 11a, b, c und d größeren Umfang aufweisen, um ein gewisses Spiel bei der Axialverschiebung der Führungsbolzen 11, b, c und d innerhalb der Bohrungen 27a, b, c und d beim Zentrieren zu ermöglichen. Beim Schließen der Formhälften 3 und 5 bilden somit die Führungsbolzen 11 und die Bohrungen 27 eine Vorzentrierung der beiden Formhälften 3 und 5.

Ferner sind in der Formkonturplatte 25 Ausnehmungen 29a, b, c und d zur komplementären Aufnahme von zweiten Führungselementen 31a, b, c und d vorgesehen. Die zweiten Führungselemente 31a, b, c und d werden in bekannter Weise mit der Formkonturplatte 25 gekoppelt, beispielsweise über geeignete Befestigungsmittel, wie etwa Schrauben, verschraubt. Im Inneren der zweiten Führungselemente 31a, b, c und d sind Führungskanäle 33a, b, c und d vorgesehen, die von der Formhälfte 5 nach außen offen sind.

Beim Schließen der beiden Formhälften 3 und 5 dringen nach einer Vorzentrierung über die zuvor beschriebenen Führungsbolzen 11 und Bohrungen 27 etwas zeitlich versetzt die Keilspitzen 14 der zapfenartigen Führungselemente 13a, b, c und d in die Führungskanäle 33a, b, c und d ein. Der Zentrierweg entspricht dabei der Länge der zapfenartigen Führungselemente 13a, b, c mit deren jeweiliger Keilspitze 14 und die Zentrierung endet wenn die Formkonturplatte 9 mit ihrer Auflagefläche 16 auf der Anlagefläche 28 der Formkonturplatte 25 aufliegt.

Bei Spritzgusswerkzeugen und Druckgusswerkzeugen ist diese Feinzentrierung erforderlich, um zu verhindern, dass die Formkonturen der jeweiligen Formhälften 3 und 5 aus einer Ausrichtung zueinander gelangen und dabei einander gegenseitig beschädigen. Ebenso ist dies erforderlich, um eine entsprechende Qualität der geformten Gegenstände zu gewährleisten. Bei einem Stanzwerkzeug ist eine solche Zentriergenauigkeit über die Feinzentrierung erforderlich, um eine reproduzierbare Stanzung zu erreichen, eine Beschädigung der Stanzvorrichtung zu verhindern und eine gleichbleibende Materialqualität zu gewährleisten.

Fig. 2 zeigt die Formvorrichtung 1 in ihrer geschlossenen Position, bei der die Auflagefläche 16 (vgl. Fig. 1) der Formkonturplatte 9 auf der Anlagefläche 28 der Formkonturplatte 25 aufliegt und die Führungsbolzen 11a, b, c und d vollständig in die Bohrungen 27a, b, c und d eingedrungen sind und ferner die zapfenartigen Führungselemente 13a, b, c und d vollständig in den Führungskanälen 33a, b, c und d der zweiten Führungselemente 31a, b, c und d aufgenommen sind.

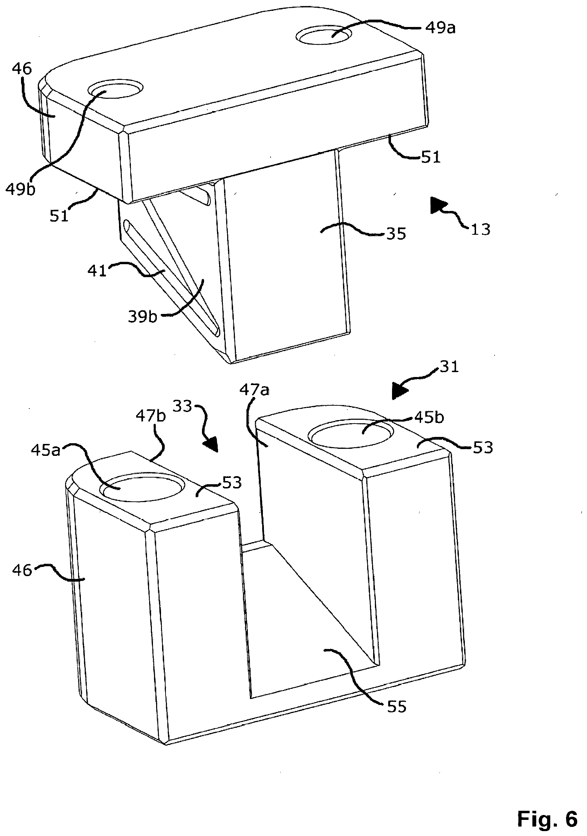

Fig. 3 bis 6 zeigen ein erstes Ausführungsbeispiel einer Feinzentrierungseinheit 34, in verschiedenen Ansichten. In Fig. 3 und 6 ist die Feinzentrierungseinheit 34 jeweils in einer geöffneten Position von vorne und einmal von hinten in einer schrägen perspektivischen Darstellung dargestellt.

Die Feinzentrierungseinheit 34 umfasst dabei ein erstes Führungselement 13 und ein zweites Führungselement 31, die beide zur Feinzentrierung ineinander gleiten. Dazu umfasst das erste Führungselement 13 an seiner Unterseite einen sockelartigen Abschnitt bzw. Trägerelement 37. Darin sind Bohrungen 35a, b vorgesehen, in die Befestigungsmittel zur Befestigung des ersten Führungselements 13 in einer Formkonturplatte ausgebildet sind. Geeignete Befestigungsmittel können beispielsweise Schrauben oder Bolzen sein. Das Trägerelement 37 umfasst eine zur Ausnehmung 15a, b, c und d in der Formkonturplatte 9 komplementär ausgebildete Form und Abmessung. Die Anlagefläche 46 zur Anlage in der Formkonturplatte 9 ist dabei abgerundet ausgebildet.

Von dem Trägerelement 37 erhebt sich ein zapfenartiger Abschnitt bzw. Zapfen 35 in etwa im rechten Winkel nach oben. Der Zapfen 35 umfasst an seiner dem Trägerelement 37 abgewandten Ende eine schräge Stirnfläche 43, die den Sockel nach oben keilförmig enden lässt. An beiden Seitens des Zapfens 35 sind Gleitflächen 39a und b vorgesehen, die komplementär zu Gleitflächen 47a und b im Führungskanal ausgebildet sind. In den Gleitflächen 39a und b sind nutförmige Ausnehmungen 41 für ein Gleitmittel oder Schmiermittel (nicht gezeigt) vorgesehen. Alternativ oder zusätzlich können hier auch Gleitmitteleinsätze in entsprechende Ausnehmungen eingesetzt werden, die beispielsweise als Gleitmittel Grafit oder andere Schmiermittel umfassen.

Das erste und zweite Führungselement können entweder im oberen Formelement 3 oder im unteren Formelement bzw. Formhälfte 5 angeordnet sein (vgl. Fig. 1). Das zweite Führungselement 31 ist in etwa U-förmig ausgebildet und umfasst an seiner einer Formkonturplatte 25 zugewandten Seite eine zu einer in der Formkonturplatte 25 vorgesehenen Ausnehmung 29 komplementäre Ausgestaltung bzw. Anlagefläche 46. Zur Befestigung des zweiten Führungselements 31 sind Bohrungen 49a und b vorgesehen. In diese Bohrungen lassen sich geeignete Befestigungsmittel, beispielsweise Schrauben, einsetzen, mit denen das zweite Führungselement 31 an der jeweiligen Formkonturplatte 7, 25 befestigt ist. Im Inneren des zweiten Führungselements 31 ist ein Führungskanal 33 ausgebildet, der zu den Gleitflächen 39a, b des ersten Führungselements komplementäre Gegenführungsflächen 47a und 47b umfasst.

Ferner umfasst das zweite Führungselement 31 an seiner dem ersten Führungselement 13 zugewandten Seite Anlagenflächen 53, die im geschlossenen Zustand der Feinzentrierungseinheit 34 an den komplementären Gegenflächen 51 am ersten Führungselement 13 anliegen.

Sämtliche Kanten des ersten und zweiten Führungselements 13, 31 sind abgerundet, um einen Eingriff bzw. Eindringen der jeweiligen Führungselemente 13, 31 zu erleichtern, und um einen Verschleiß zu minimieren.

In Fig. 6 ist ferner eine Schrägfläche 55 gezeigt, die komplementär zur stirnseitigen Schrägfläche 43 des ersten Führungselements ausgebildet ist. Die beiden Schrägflächen 43 und 55 können in einem Winkel von etwa 10° bis 45° zur Trennebene der Formhälften 3 und 5 ausgebildet sein. Beim Schließen der beiden Führungselemente 13 und 31 nähern sich die beiden Schrägflächen 43 und 55 an, treffen jedoch nicht aufeinander, vielmehr ist hier ein geringer Abstand vorgesehen, wenn die Anlageflächen 53 an den Gegenanlagenflächen 51 des jeweils ersten und zweiten Führungselements 13, 31 anliegen.

Wie insbesondere den Fig. 3 und 6 zu entnehmen ist, verlängert die keilförmige Ausgestaltung des Zapfen 35 die seitlichen Gleitflächen 39a und 39b. Damit lässt sich bei einer kompakten Bauweise der Zentrierweg vergrößern. Darüber hinaus taucht beim Schließen der beiden Führungselemente 13 und 31 zunächst die Spitze des keilförmigen Abschnitts 14 in den Führungskanal 33 ein. Beim weiteren Schließen der beiden Feinzentrierungselemente bzw. Führungselemente vergrößern sich dabei die aufeinander treffenden Gleitflächen 47a und b sowie 39a und b beim weiteren Eintauchen des Sockels 35, so dass ein stufenloses Vergrößern der Gleitflächen und damit des Zentrierwegs ermöglicht wird. Dies erlaubt ein sehr weiches Eindringen des ersten Führungselements 13 in das zweite Führungselement 31 und vermindert damit einen Verschleiß der einzelnen Formelemente und Maschinenteile.

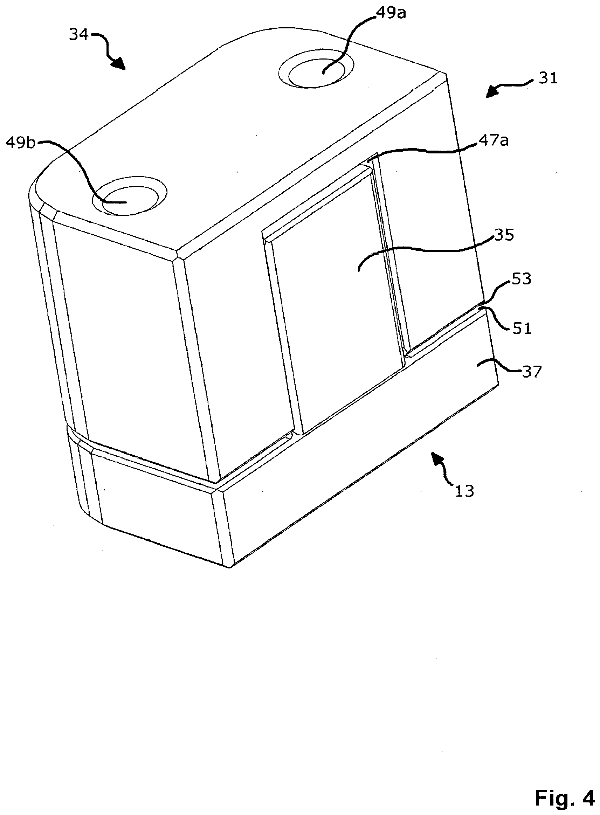

In Fig. 4 ist die Feinzentrierungseinheit 34 in ihrer geschlossenen Position gezeigt.

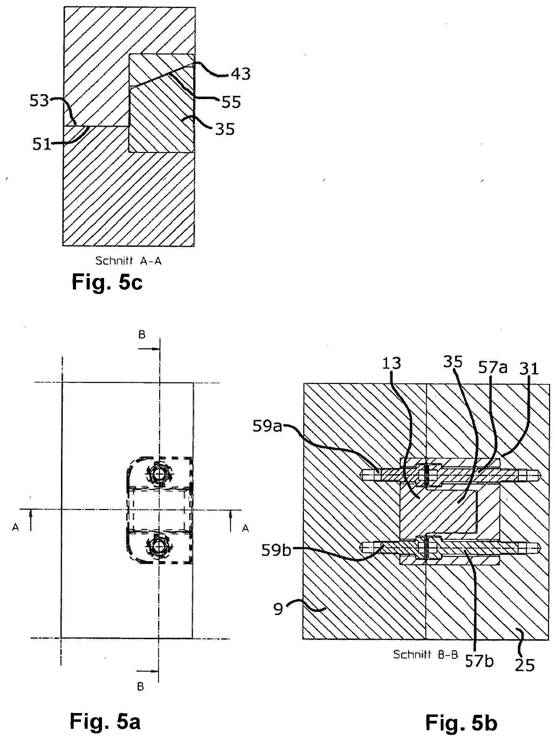

Fig. 5 zeigt eine Schnittebenenansicht der Feinzentrierungseinheit 34 aus Fig. 4. Die Querschnittsdarstellung in Fig. 5b zeigt eine Schnittlinie entlang des Schnitts A-A, wobei das erste und das zweite Führungselement 13 und 31 sich in der geschlossenen Position befinden. Dabei sind die Schrägflächen 43 und 55 geringfügig voneinander beabstandet, wohingegen die Anlageflächen 51 und 53 jeweils aufeinander aufliegen.

In der in Fig. 5b dargestellten Schnittansicht entlang der Linie B-B sind jeweils Schrauben 54a und b zur Befestigung des Trägerabschnitts 37 in der Formkonturplatte 9 bzw. 25 dargestellt. Ebenso sind Befestigungsmittel 57a und 57b hier in Gestalt von Schrauben dargestellt, die das zweite Führungselement 31 an der jeweiligen Formkonturplatte 9 bzw. 25 befestigen.

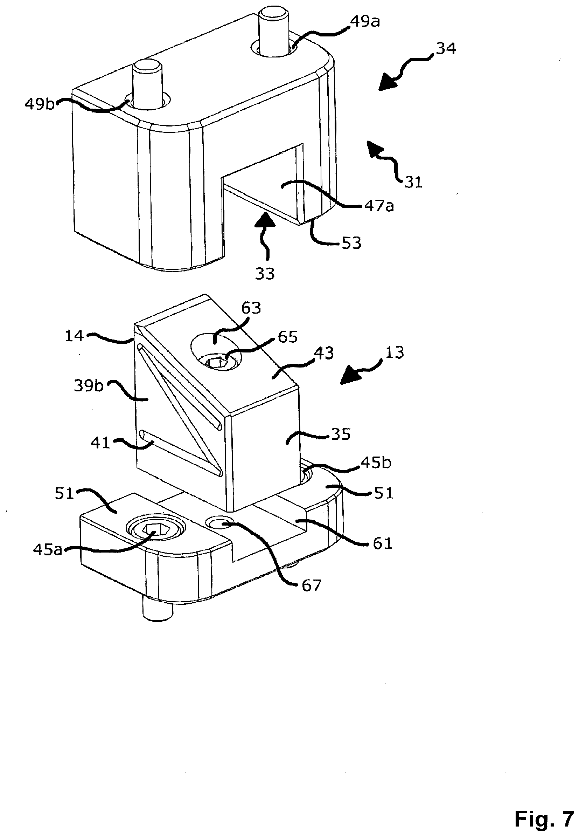

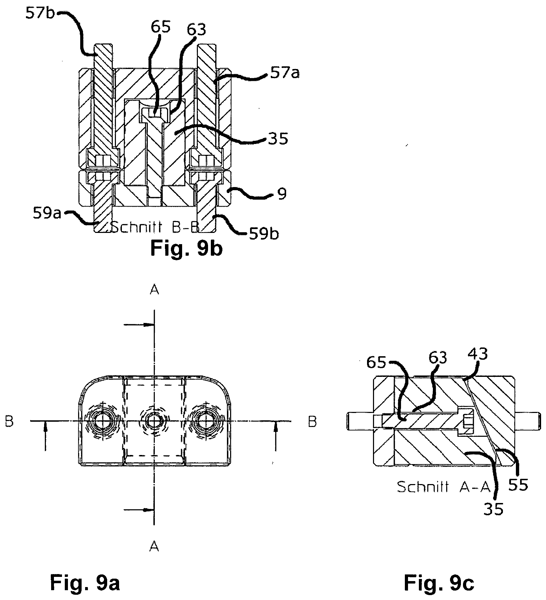

Fig. 7 zeigt ein weiteres Ausführungsbeispiel einer erfindungsgemäßen Feinzentrierungseinheit 34. Dieses entspricht im Wesentlichen dem zuvor dargestellten Ausführungsbeispiel aus Fig. 3 bis 6. Die Feinzentrierungseinheit 34 ist jedoch zweiteilig ausgebildet und umfasst einen sockelartigen Trägerabschnitt bzw. Trägerelement 37, in dem eine Aussparung 61 zur Aufnahme eines separaten Zapfens 35 vorgesehen ist. Der Zapfen 35 wird in die Ausnehmung 61 eingesetzt und umfasst in seinem Inneren eine Bohrung 63, in die ein Befestigungsmittel 65, hier eine Schraube, eingebracht wird, um den Sockel 35 mit dem Trägerelement 37 in einer dort ausgebildeten Bohrung 67 zu verschrauben.

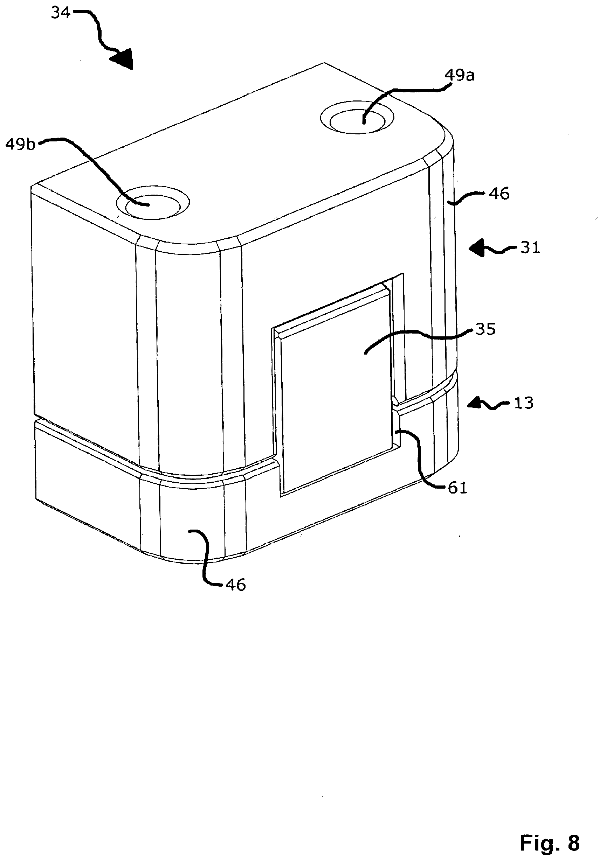

In Fig. 8 ist das Ausführungsbeispiel aus Fig. 7 im geschlossenen Zustand dargestellt, bei dem die beiden Führungselemente 13 und 31 ineinander verfahren sind. Die Funktionsweise ist hier dieselbe, wie bei dem zuvor dargestellten Ausführungsbeispiel aus Fig. 3 bis 6.
In der in Fig. 9a dargestellten Schnittebenenansicht sind die Querschnitte entlang der Linie A-A aus Fig. 9b sowie entlang der Linie B-B, wie in Fig. 9b dargestellt, zu entnehmen. Fig. 9c zeigt die Schraube 65, die in die Ausnehmung 63 eingebracht ist und den Zapfen 35 mit dem sockelartigen Trägerelement 37 in der Bohrung 67 befestigt. Auch hier ist ersichtlich, dass die stirnseitige Schrägfläche 43 geringfügig von der komplementären Schrägfläche 55 im zweiten Führungselement 31 beabstandet ist.

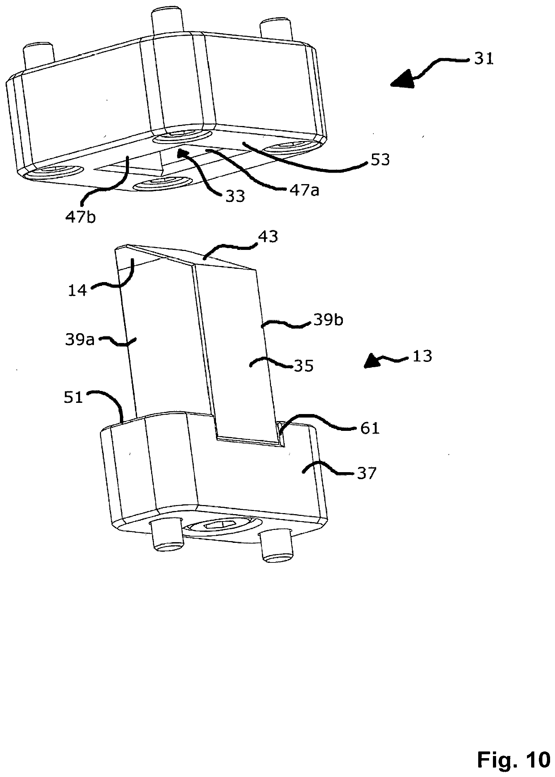

Fig. 10 zeigt ein nicht-erfindungsgemäßes Ausführungsbeispiel einer Feinzentrierungseinheit 34. Das erste Führungselement 13 entspricht im Wesentlichen den beiden zuvor dargestellten Ausführungsbeispielen der erfindungsgemäßen Feinzentrierungseinheit 34. Der Zapfen 35 kann dabei einstückig mit dem sockelartigen Trägerelement 37 ausgebildet sein oder aber auch wie im zweiten Ausführungsbeispiel zweistückig ausgebildet sein und dann entsprechend über ein Befestigungsmittel, wie etwa eine Schraube, mit dem Trägerelement gekoppelt werden.

Das zweite Führungselement 31 ist in diesem Ausführungsbeispiel quaderförmig ausgebildet und umfasst in seinem Zentrum einen Führungskanal 33. Der Führungskanal 33 ist komplementär zu dem Zapfen 35 ausgebildet. Beim Eintauchen des Zapfen 35 mit seiner schrägen Keilspitze 14 und seiner Schrägfläche 43 gleitet der Zapfen 35 mit seinen seitlichen Gleitflächen 39a und 39b in komplementären Gegengleit- bzw. Führungsflächen 47b. Die beiden anderen Flächen innerhalb des quaderförmigen Führungselements 31 sind mit einem gewissen Spiel versehen, so dass der Zapfen 35 leicht von diesen beabstandet ist.

Die Funktionsweise beim Zentrieren entspricht hierbei den zuvor dargestellten Ausführungsbeispielen. Auch hier ermöglicht die keilförmige Ausgestaltung der Schrägfläche 43 bzw. des oberen Endes des Zapfens 35 ein wie zuvor dargestelltes weiches Eintauchen der Keilspitze in dem Führungskanal 33, so dass der Zentrierweg sich stufenlos beim weiteren Eintauchen des Zapfens 35 vergrößert und dabei die aneinander anliegenden Zentrierflächen 39a und b sowie 47a und b aneinander gleiten.

Der Zapfen 35 durchdringt jedoch in diesem Ausführungsbeispiel das zweite Führungselement 31 vollständig durch einen nicht gezeigten Durchbruch. Die geschlossene quaderförmige Ausgestaltung des Führungskanals 33 ermöglicht eine sichere und stabile Führung des Zapfens 35. Vorteilhaft kann diese quaderförmige Ausgestaltung an beliebig geeigneter Position auf der jeweiligen Formkonturplatte 9 bzw. 25 angeordnet sein. Damit das erste Führungselement 13 vollständig in das zweite Führungselement 31 eintauchen kann, ist dieses derart angebracht, dass sich dahinter keine Platte befindet. Alternativ, falls sich eine Formkonturplatte oder eine andere Platte fortsetzt, ist in dieser eine entsprechende Ausnehmung bzw. ein Durchbruch (nicht gezeigt) vorgesehen, so dass der Zapfen 35 vollständig eindringen kann und die Gegenflächen aufeinander aufliegen.

### Bezugszeichenliste

- 1: Formvorrichtung
- 3: Formelement/Hälfte (Einspritzseite)
- 5: Formelement/Hälfte (Auswerferseite)
- 7: Aufspannplatte
- 9: Formkonturplatte (Düsenseite)
- 11a, b, c, d: Führungsbolzen
- 13 a, b, c, d: Zapfenartige Führungselemente
- 14: Keilspitze
- 15 a, b, c, d: Ausnehmungen für 13 a, b, c, d
- 16: Auflagefläche
- 17: Trennebene
- 19: Aufspannplatte
- 21: Distanzplatte
- 23: Auswurfmechanismus
- 25: Formkonturplatte (Auswerferseite)
- 26: Form
- 27 a, b, c, d: Bohrungen
- 28: Anlagefläche
- 29 a, b, c, d: Ausnehmungen für 31
- 31a, b, c, d: Zweite Führungselemente
- 33 a, b, c, d: Führungskanal
- 34: Feinzentrierungseinheit
- 35: Zapfen
- 37: Sockelartiges Trägerelement
- 39 a, b: Gleitflächen
- 41: Schmiermittelausnehmung
- 43: Schräge Stirnfläche
- 45 a, b: Bohrung
- 46: Anlagefläche
- 47 a, b: Gegenführungsfläche
- 49 a, b: Bohrungen
51 Anlagefläche
53 Gegenfläche
55 Komplementäre Schrägfläche
57a, b Befestigungsmittel
59a, b Befestigungsmittel
61 Ausnehmung
63 Bohrung
65 Befestigungsmittel
- 67: Ausnehmung/Bohrung

## Patentansprüche

1. Formvorrichtung (1) zum Formen von geformten Gegenständen umfassend
- zwei Formelemente (3, 5), insbesondere eines Spritzguss-, Druckguss- oder Stanzwerkzeugs,
- eine Feinzentrierungseinheit (34) für den Werkzeug- und Formenbau zum Feinzentrieren der wenigstens zwei Formelemente (3, 5) wobei die Feinzentrierungseinheit (34) umfasst:
- ein erstes Führungselement (13a, b, c, d) mit wenigstens zwei Gleitflächen (39a,b), das mit dem ersten Formelement (3) koppelbar ist, und
- ein zweites Führungselement (31a, b, c, d), das mit dem zweiten Formelement (5) koppelbar ist, wobei das zweite Führungselement (5) einen Führungskanal (33a, b, c, d) umfasst, der komplementär zu den wenigstens zwei Gleitflächen des ersten Führungselements (13a, b, c, d) ausgebildet ist und beim Öffnen und Schließen der Formelemente (3, 5) das erste Führungselement (13a, b, c, d) wenigstens teilweise im Führungskanal (33a, b, c, d) gleitet,
wobei das erste Führungselement (13a, b, c, d) an seinem dem ersten Formelement (3) gegenüberliegenden Ende (14) zur Vergrößerung der Gleitflächen (39a, b) eine schrägverlaufende Stirnfläche (43) umfasst, so dass das Ende (14) keilförmig ausgebildet ist,
**dadurch gekennzeichnet, dass**
das zweite Führungselement (31a, b, c, d) an seinem dem zweiten Formelement (5) zugewandten Ende des Führungskanals (33) eine komplementäre schrägverlaufende Stirnfläche (55) umfasst, wobei sich beide schrägverlaufende Stirnflächen (43, 55) beim Schließen der Formhälften (3, 5) nähern.

2. Formvorrichtung (1) nach Anspruch 1, bei der beim Eintauchen des keilförmigen Endes (14) des ersten Führungselements (13a, b, c, d) der Feinzentrierungseinheit (34) in den Führungskanal (33a, b, c, d) eine Gleitflächenvergrößerung stufenlos erfolgt.

3. Formvorrichtung (1) nach einem der vorstehenden Ansprüche, bei der der Neigungswinkel der Stirnfläche (43) des ersten Führungselements (13a, b, c, d) der Feinzentrierungseinheit (34) in einem Bereich von 10 bis 45° zur Trennebene (11) der Formelemente (3, 5) liegt.

4. Formvorrichtung (1) nach einem der vorstehenden Ansprüche, bei der das erste Führungselement (13a, b, c, d) der Feinzentrierungseinheit (34) einen zapfenförmigen Abschnitt (35) mit dem keilförmigen Ende 14 umfasst, der beim Feinzentrieren im Führungskanal (33) eintaucht.

5. Formvorrichtung (1) nach einem der vorstehenden Ansprüche, bei der der Führungskanal (33) der Feinzentrierungseinheit (34) u-förmig und nach wenigstens einer Seite offen ausgebildet ist oder bei der der Führungskanal (33) quaderförmig und zu allen Seiten geschlossen ausgebildet ist.

6. Formvorrichtung (1) nach einem der vorstehenden Ansprüche, bei der das erste Führungselement (13a, b, c, d) der Feinzentrierungseinheit (34) einstückig ausgebildet ist.

7. Formvorrichtung (1) nach einem der Ansprüche 1 bis 5, bei der das erste Führungselement (13a, b, c, d) der Feinzentrierungseinheit (34) mehrteilig ausgebildet ist.

8. Formvorrichtung (1) nach Anspruch 7, bei der das erste Führungselement (13a, b, c, d) der Feinzentrierungseinheit (34) einen Führungszapfen (35) und ein Trägerelement (37) umfasst, die miteinander koppelbar sind.

9. Formvorrichtung (1) nach einem der vorstehenden Ansprüche, bei der das erste Führungselement (13a, b, c, d) der Feinzentrierungseinheit (34) an den wenigstens zwei Gleitflächen (39a, b) Gleitmittelausnehmungen (41) und/oder Gleitmitteleinsätze umfasst.

10. Formvorrichtung (1) nach einem der vorstehenden Ansprüche, bei der der Neigungswinkel der komplementären Stirnfläche (55) in einem Bereich von 10 bis 45° zur Trennebene (17) der Formelemente (3, 5) liegt.

11. Verwendung wenigstens einer Feinzentrierungseinheit (34) der Formvorrichtung (1) nach einem der Ansprüche 1 bis 10 zum Zentrieren der Formvorrichtung (1) zum Formen von geformten Gegenständen, insbesondere eines Spritzguss-, Druckguss- oder Stanzwerkzeugs.

12. Formvorrichtung (1) nach einem der vorstehenden Ansprüche 1 bis 10 umfassend
- wenigstens einen Öffnungs- und Schließmechanismus zum Öffnen und Schließen des ersten und zweiten Formelemente (3, 5), und
- wenigstens zwei Feinzentrierungseinheiten (34).

13. Formvorrichtung (1) nach Anspruch 12, umfassend wenigstens vier Feinzentrierungseinheiten (34), wobei die Feinzentrierungseinheiten (34) kreuzförmig in den Formelementen (3,5) angeordnet sind.

14. Formvorrichtung (1) nach Anspruch 12 oder 13, bei der das erste Formelement (3) wenigstens eine erste Ausnehmung (15a, b, c, d) umfasst, die zur koppelbaren Aufnahme des ersten Führungselements (13a, b, c, d) ausgelegt ist, und das zweite Formelement (5) wenigstens eine zweite Ausnehmung (29a, b, c, d) umfasst, die zur koppelbaren Aufnahme des zweiten Führungselements (31a, b, c, d) ausgelegt ist.

## Claims

1. Moulding device (1) for the moulding of moulded articles, comprising
- two mould elements (3, 5), in particular of an injection-moulding tool, die-casting tool or punching tool,
- a fine centring unit (34) for tool and mould production, for the fine centring of the at least two mould elements (3, 5), wherein the fine centring unit (34) comprises:
- a first guide element (13a, b, c, d), which has at least two sliding surfaces (39a, b) and can be coupled to the first mould element (3), and
- a second guide element (31a, b, c, d), which can be coupled to the second mould element (5), wherein the second guide element (5) comprises a guide channel (33a, b, c, d) with a shape complementing the at least two sliding surfaces of the first guide element (13a, b, c, d), and, during the opening and closure of the mould elements (3, 5), the first guide element (13a, b, c, d) slides at least partially in the guide channel (33a, b, c, d),
wherein the first guide element (13a, b, c, d), at its end (14) opposite the first mould element (3), comprises an obliquely extending front face (43) for enlarging the sliding surfaces (39a, b), such that the end (14) has a wedge-shaped design,
**characterized in that**
the second guide element (31a, b, c, d), at its end of the guide channel (33) directed towards the second mould element (5), comprises a complementary obliquely extending front face (55), wherein both obliquely extending front faces (43, 55) approach each other during the closure of the mould halves (3, 5).

2. Moulding device (1) according to Claim 1, in which an enlargement of the sliding surfaces takes place in a stepless manner upon engagement of the wedge-shaped end (14) of the first guide element (13a, b, c, d) of the fine centring unit (34) into the guide channel (33a, b, c, d).

3. Moulding device (1) according to either of the preceding claims, in which the angle of inclination of the front face (43) of the first guide element (13a, b, c, d) of the fine centring unit (34) is in a range of 10 to 45° with respect to the parting plane (11) of the mould elements (3, 5).

4. Moulding device (1) according to one of the preceding claims, in which the first guide element (13a, b, c, d) of the fine centring unit (34) comprises a peg-shaped portion (35) with the wedge-shaped end (14), which engages in the guide channel (33) during the fine centring.

5. Moulding device (1) according to one of the preceding claims, in which the guide channel (33) of the fine centring unit (34) is U-shaped and open to at least one side, or in which the guide channel (33) is cuboid and closed on all sides.

6. Moulding device (1) according to one of the preceding claims, in which the first guide element (13a, b, c, d) of the fine centring unit (34) is formed in one piece.

7. Moulding device (1) according to one of Claims 1 to 5, in which the first guide element (13a, b, c, d) of the fine centring unit (34) has a multi-part design.

8. Moulding device (1) according to Claim 7, in which the first guide element (13a, b, c, d) of the fine centring unit (34) comprises a guide peg (35) and a carrier element (37), which can be coupled to each other.

9. Moulding device (1) according to one of the preceding claims, in which the first guide element (13a, b, c, d) of the fine centring unit (34) comprises, on the at least two sliding surfaces (39a, b), lubricant-receiving recesses (41) and/or lubricant inserts.

10. Moulding device (1) according to one of the preceding claims, in which the angle of inclination of the complementary front face (55) is in a range of 10 to 45° with respect to the parting plane (17) of the mould elements (3, 5).

11. Use of at least one fine centring unit (34) of the moulding device (1) according to one of Claims 1 to 10 for centring the moulding device (1) for the moulding of moulded articles, in particular of an injection-moulding tool, die-casting tool or punching tool.

12. Moulding device (1) according to one of Claims 1 to 10, comprising
- at least one opening and closing mechanism for opening and closing the first and second mould elements (3, 5), and
- at least two fine centring units (34).

13. Moulding device (1) according to Claim 12, comprising at least four fine centring units (34), wherein the fine centring units (34) are arranged in a cross shape in the mould elements (3, 5).

14. Moulding device (1) according to Claim 12 or 13, in which the first mould element (3) comprises at least one first recess (15a, b, c, d) designed to receive the first guide element (13a, b, c, d) by coupling, and the second mould element (5) comprises at least one second recess (29a, b, c, d) designed to receive the second guide element (31a, b, c, d) by coupling.

## Revendications

1. Dispositif de moulage (1) servant à mouler des objets moulés, comprenant
- deux éléments de moulage (3, 5), en particulier un outil de coulée par injection, de coulée par pression ou d'estampage,
- une unité de centrage précis (34) pour la production d'outils et de moules servant à centrer avec précision les au moins deux éléments de moulage (3, 5), dans lequel l'unité de centrage précis (34) comprend :
- un premier élément de guidage (13a, b, c, d) avec au moins deux surfaces coulissantes (39a, b), lequel peut être couplé au premier élément de moulage (3), et
- un deuxième élément de guidage (31a, b, c, d), qui peut être couplé au deuxième élément de moulage (5), dans lequel le deuxième élément de guidage (5) comprend un canal de guidage (33a, b, c, d), qui est réalisé de manière complémentaire aux au moins deux surfaces coulissantes du premier élément de guidage (13a, b, c, d) et qui fait glisser, lors de l'ouverture et de la fermeture des éléments de moulage (3, 5), le premier élément de guidage (13a, b, c, d) au moins en partie dans le canal de guidage (33a, b, c, d),
dans lequel le premier élément de guidage (13a, b, c, d) comprend, au niveau de son extrémité (14) faisant face au premier élément de moulage (3), aux fins de l'agrandissement des surfaces coulissantes (39a, b), une surface frontale (43) s'étendant de manière oblique de sorte que l'extrémité (14) est réalisée de manière à présenter une forme de coin,
**caractérisé en ce que**
le deuxième élément de guidage (31a, b, c, d) comprend, au niveau de son extrémité, tournée vers le deuxième élément de moulage (5), du canal de guidage (33), une surface frontale (55) complémentaire s'étendant de manière oblique, dans lequel deux surfaces frontales (43, 55) s'étendant de manière oblique se rapprochent lors de la fermeture des moitiés de moule (3, 5).

2. Dispositif de moulage (1) selon la revendication 1, dans lequel un agrandissement des surfaces coulissantes est réalisé en continu lorsque l'extrémité (14) en forme de coin du premier élément de guidage (13a, b, c, d) de l'unité de centrage précis (34) est enfoncée dans le canal de guidage (33a, b, c, d).

3. Dispositif de moulage (1) selon l'une quelconque des revendications précédentes, dans lequel l'angle d'inclinaison de la surface frontale (43) du premier élément de guidage (13a, b, c, d) de l'unité de centrage précis (34) se situe dans une plage allant de 10 à 45° par rapport au plan de séparation (11) des éléments de moulage (3, 5).

4. Dispositif de moulage (1) selon l'une quelconque des revendications précédentes, dans lequel le premier élément de guidage (13a, b, c, d) de l'unité de centrage précis (34) comprend une section (35) en forme de tourillon avec l'extrémité (14) en forme de coin, laquelle s'enfonce dans le canal de guidage (33) lors du centrage précis.

5. Dispositif de moulage (1) selon l'une quelconque des revendications précédentes, dans lequel le canal de guidage (33) de l'unité de centrage précis (34) est réalisé de manière à présenter une forme de U et de manière ouverte vers au moins un côté ou dans lequel le canal de guidage (33) est réalisé de manière à présenter une forme carrée et de manière fermée vers tous les côtés.

6. Dispositif de moulage (1) selon l'une quelconque des revendications précédentes, dans lequel le premier élément de guidage (13a, b, c, d) de l'unité de centrage précis (34) est réalisé d'un seul tenant.

7. Dispositif de moulage (1) selon l'une quelconque des revendications 1 à 5, dans lequel le premier élément de guidage (13a, b, c, d) de l'unité de centrage précis (34) est réalisé en plusieurs parties.

8. Dispositif de moulage (1) selon la revendication 7, dans lequel le premier élément de guidage (13a, b, c, d) de l'unité de centrage précis (34) comprend un tourillon de guidage (35) et un élément de support (37), qui peuvent être couplés l'un à l'autre.

9. Dispositif de moulage (1) selon l'une quelconque des revendications précédentes, dans lequel le premier élément de guidage (13a, b, c, d) de l'unité de centrage précis (34) comprend, au niveau des au moins deux surfaces coulissantes (39a, b), des évidements de moyen coulissant (41) et/ou des inserts de moyen coulissant.

10. Dispositif de moulage (1) selon l'une quelconque des revendications précédentes, dans lequel l'angle d'inclinaison de la surface frontale (55) complémentaire se situe dans une plage allant de 10 à 45° par rapport au plan de séparation (17) des éléments de moulage (3, 5).

11. Utilisation d'au moins une unité de centrage précis (34) du dispositif de moulage (1) selon l'une quelconque des revendications 1 à 10 servant à centrer le dispositif de moulage (1) afin de mouler des objets moulés, en particulier un outil de coulée par injection, de coulée par pression ou d'estampage.

12. Dispositif de moulage (1) selon l'une quelconque des revendications précédentes 1 à 10, comprenant
- au moins un mécanisme d'ouverture et de fermeture servant à ouvrir et à fermer le premier et le deuxième élément de moulage (3, 5), et
- au moins deux unités de centrage précis (34).

13. Dispositif de moulage (1) selon la revendication 12, comprenant au moins quatre unités de centrage précis (34), dans lequel les unités de centrage précis (34) sont disposées de manière à présenter une forme de croix dans les éléments de moulage (3, 5).

14. Dispositif de moulage (1) selon la revendication 12 ou 13, dans lequel le premier élément de moulage (3) comprend au moins un premier évidement (15a, b, c, d), qui est configuré pour recevoir avec accouplement possible le premier élément de guidage (13a, b, c, d), et le deuxième élément de moulage (5) comprend au moins un deuxième évidement (29a, b, c, d), qui est configuré pour recevoir avec possibilité d'accouplement le deuxième élément de guidage (31a, b, c, d).
